# EUROPEAN PATENT APPLICATION

(11) **EP 2 843 995 A1**
(43) Date of publication of application: **04.03.2015**
(21) Application number: 13828408.8
(22) Date of filing: 25.06.2013
(51) Int. Cl.: H04W 36/14

(54) **SYSTEM AND METHOD FOR SUPPORTING SAME NUMBER USING SRVCC**

(30) Priority: 09.08.2012 CN 201210281802
(71) Applicant: ZTE Corporation, Shenzhen, Guangdong 518057 (CN)
(72) Inventor: GAO, Yang, Shenzhen Guangdong 518057 (CN)
(74) Representative: Tischner, Oliver
(86) International application number: PCT/CN2013/077940
(87) International publication number: WO 2014/023139

(57) **Abstract**

Provided are a system and method for supporting one number in SRVCC. The system for supporting one number in SRVCC of the disclosure comprises: an IMS network, a CS network, a first terminal device and a second terminal device, wherein the first terminal device is used for establishing a session between the IMS network and the second terminal device using a subscriber number, and is also used for establishing a session between the CS network and the second terminal device using the subscriber number when being switched from the IMS network to the CS network while it is a calling party. The method can support an SRVCC system to establish sessions among different networks using the same number during domain switching, improve the operating efficiency of the SRVCC system, and facilitate the use by users.

## Description

### TECHNICAL FIELD

The disclosure relates to the field of wireless communication, especially to a system and method of supporting one number in Single Radio Voice Call Continuity (SRVCC).

### BACKGROUND

IP Multimedia Subsystem (IMS) is a future direction of multimedia communication, as well as the most important component of the next generation network. Proposed by the Third Generation Partnership Project (3GPP) as a subsystem supporting IP multimedia services, it has a remarkable characteristic of usage of a Session Initial Protocol (SIP) system, where the communication is independent of its access way, having various capabilities such as separation of multimedia service control function and bearing capacity, separation of call and session, separation of application and service, separation of service and network, and integration of mobile network services and Internet services.

As a Voice over Long Term Evolution (VoLTE) voice service continuity scheme proposed by 3GPP, the Single Radio (SR) Voice Call Continuity (SRVCC) is mainly used for guaranteeing voice call continuity during movement of a Single Radio User Equipment (UE) between a LTE/Pre-LTE network and a 2G/3G Circuit Switched (CS) network. SRVCC corresponds to a Single Radio UE, that is, a UE could only use one of 2G/3G Radio and LTE Radio at one time. The requirement of SR is brought up by terminal manufacturers, the aim of which is to reuse the radios and corresponding circuits of 2G/3G and LTE networks. The single Radio brings to SRVCC a specific nature: the extremely fast handover between Radios, while it requires a network side channel related to CS to be built up and a Remote Update before handover.

In process design of handover in SRVCC, firstly the CS channel is established and the Remote Update is performed, and then a Packet Switched (PS) to CS Handover is performed. In the case of roaming, the Remote Update takes several seconds.

A SRVCC system defined by 3GPP concerns that a subscriber is obliged to use two different subscriber numbers under IMS and CS network during handover, which makes the SRVCC system to operate with low efficiency and, on the other hand, causes inconvenience to the subscriber in actual operation.

### SUMMARY

The disclosure is directed to provide a system and method of supporting one number in SRVCC, which can improve the efficiency of the SRVCC system and is convenient for subscribers.

In view of the above, the disclosure provides a method of SRVCC supporting one number, the specific resolution being as following:
According to an aspect, a method of supporting one number in Single Radio Voice Call Continuity (SRVCC) is provided, which includes: setting up in an Internet Protocol Multimedia Subsystem (IMS) network, by a first terminal equipment using a subscriber number, a conversation with a second terminal equipment; and setting up in a Circuit Switched (CS) network, by the first terminal equipment using the subscriber number, a conversation with the second terminal equipment, when the first terminal equipment serves as a calling party and performs a handover from the IMS network to the CS network.

Preferably, the method of supporting one number in SRVCC further includes: updating, by the IMS network, subscriber location information in the CS network, when the first terminal equipment initially registers with the IMS network.

Preferably, the method of supporting one number in SRVCC further includes: when the second terminal equipment serves as the calling party to call the first terminal equipment in the IMS network or the CS network, performing the following by the IMS network or the CS network: inquiring the subscriber location information, determining a network in which the first terminal equipment is, and setting up the conversation with the first terminal equipment in the network.

Preferably, when the first terminal equipment performs a handover from the IMS network to the CS network, the setting up in the CS network, by the first terminal equipment using the subscriber number, a conversation with the second terminal equipment includes: setting up in the CS network, by the first terminal equipment using the subscriber number, a call to a Single Call Continuity Application Server (SCC AS); triggering, by a Call Session Control Function (CSCF), the SCC AS; by the SCC AS, inquiring an original IMS network call, making the current call to succeed the original IMS network call, setting up the conversation with the second terminal equipment, and releasing the original IMS domain call.

Preferably, the updating, by the IMS network, subscriber location information in the CS network includes: storing, by the IMS network, the subscriber location information of the first terminal; sending, by the IMS network, a request message to a Home Location Register (HLR) located in the CS network, in order to inform the HLR to update the subscriber location information of the first terminal; and storing, by the HLR, the subscriber location information of the first terminal from the IMS network.

According to another aspect, a system of supporting one number in Single Radio Voice Call Continuity (SRVCC) is provided, which includes: an Internet Protocol Multimedia Subsystem (IMS) network, a Circuit Switched (CS) network, a first terminal equipment and a second terminal equipment; wherein the first terminal equipment is configured to: set up in the IMS network, using a subscriber number, a conversation with the second terminal equipment ; and set up in the CS network, using the subscriber number, a conversation with the second terminal equipment, when the first terminal equipment serves as a calling party and performs a handover from the IMS network to the CS network.

Preferably, the IMS network is configured to update the subscriber location information in the CS network, when the first terminal equipment initially registers with the IMS network.

Preferably, the second terminal equipment is configured to call the first terminal equipment in the IMS network or the CS network; and the IMS network or the CS network is configured to: when the second terminal equipment serves as the calling party to call the first terminal equipment in the IMS network or CS network, inquire the subscriber location information, determine a network in which the first terminal equipment is, and set up the conversation with the first terminal equipment in the network.

Preferably, the IMS network includes a Single Call Continuity Application Server (SCC AS) and a Call Session Control Function (CSCF); the first terminal equipment is configured to set up in the CS network, using the subscriber number, a call to the SCC AS, the CSCF is configured to trigger the SCC AS, and the SCC AS is configured to inquire the original IMS network call, make the current call to succeed the original IMS network call, set up the conversation with the second terminal equipment, and release the original IMS domain call.

Preferably, the CS network includes a Home Location Register (HLR); the IMS network is configured to store the subscriber location information of the first terminal, send a request message to the HLR located in the CS network to inform the HLR to update the subscriber location information of the first terminal; and the HLR is configured to acquire the subscriber location information of the first terminal from the IMS network and store the subscriber location information of the first terminal.

The system and method of supporting one number in SRVCC according to the disclosure is convenient for subscribers, since the one subscriber number is used during the network handover. When the first terminal equipment in the system serves as the calling party and performs a network handover, the one subscriber number is used to set up a call to a second terminal equipment in a different network, which improves the efficiency of the SRVCC system. Meanwhile, when the first terminal equipment serves as the called party, the IMS network stores the subscriber location information and updates the subscriber location information in the HLR of the CS network. When the second terminal equipment calls the first terminal equipment, this enables the second terminal equipment to set up a call to the first terminal through the initial network in which the first terminal equipment is, thus solving the problem of impossible network recognition brought by the one subscriber number used by the first terminal.

### BRIEF DESCRIPTION OF THE DRAWINGS

Figure 1 shows a structural view of a system of supporting one number in SRVCC according to embodiments of the disclosure;
Figure 2 shows a flowchart of updating the location of a CS network subscriber by the IMS network in a system of supporting one number in SRVCC according to embodiments of the disclosure;
Figure 3 shows another structural view of a system of supporting one number in SRVCC according to embodiments of the disclosure;
Figure 4 shows a flowchart of domain handover when a first terminal equipment in a system of supporting one number in SRVCC according to embodiments of the disclosure is in a normal call;
Figure 5 shows a schematic view of signalling interaction during a normal call of a first terminal equipment in a system of supporting one number in SRVCC according to embodiments of the disclosure;
Figure 6 shows a flowchart of domain handover when a first terminal equipment in a system of supporting one number in SRVCC according to embodiments of the disclosure is the called party;
Figure 7 shows a schematic view of handover signalling interaction when a first terminal equipment in a system of supporting one number in SRVCC according to embodiments of the disclosure is the called party;
Figure 8 shows a flowchart of domain handover when a first terminal equipment of a system of SRVCC supporting one number according to embodiments of the disclosure is the calling party;
Figure 9 shows a schematic view of handover signalling interaction when a first terminal equipment in a system of supporting one number in SRVCC according to embodiments of the disclosure is the called party.

### DETAILED DESCRIPTION

The disclosure is described in further detail by specific implementations in conjunction with appending drawings.

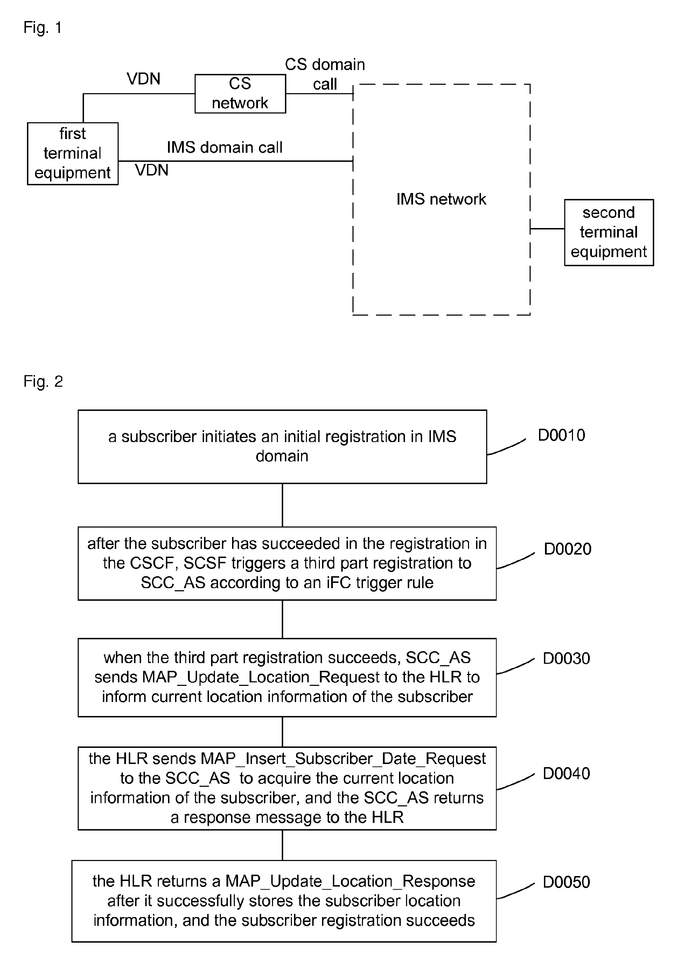

In reference to figure 1, the system of supporting one number in SRVCC according to the embodiment includes: an IMS network, a CS network, a first terminal equipment and a second terminal equipment.

The first terminal equipment is configured to set up, in the IMS network, a conversation with the second terminal equipment using a subscriber number, also configured to set up, in the CS network, when it is a calling party and is handover from the IMS network to the CS network, a conversation with the second terminal equipment using the subscriber number.

The first terminal equipment in the embodiment uses a subscriber number to call the second terminal equipment in the IMS network. If the first terminal equipment needs to switch networks, that is, from the IMS network to the CS network, because of a certain IMS network condition, the first terminal initiates a call in the CS network with the previous subscriber number to set up a conversation with the second terminal, that is, the called party. For example, a UE-A in the IMS network calls a UE-B by using a cell phone with a number 13480841952. When the UE-A has moved to the edge of the IMS network coverage, the UE-A initiates a network handover, calling the UE-B in the CS network with the one number 13480841952. When the UE-A has succeeded in setting up the conversation with the UE-B in the CS network, the previous call in the IMS network is released. A system subscriber using this embodiment may set up conversations with an opposite subscriber in two types of networks with only one number.

Since the first terminal equipment uses one and the same number in two networks, when it is the called party, the calling party have got no idea to call the first terminal from which network. In order to cope with basic call problem of the first terminal equipment, the IMS network in the system according to the embodiment is configured to update the subscriber location information in the CS network when the first terminal equipment is initially registered in the IMS network. As such, when the calling party calls a subscriber which uses one and the same number in two networks, it is possible to determine the network in which the called subscriber is by using the subscriber location information, and to set up a call with the first terminal equipment in this network. When the UE-A is the called party and the UE-B is the calling party to initiate a call in the CS network, the basic process of the call is as following:
the UE-B initiates a call in the CS network;
the CS network inquires the current location information of the called UE-A subscriber and determines which the network the UE-A is in, routes the call to the IMS network to set up a conversation with UE-A when the UE-A is in the IMS network.

The main process for updating the subscriber location in the CS network by the IMS network in the embodiment comprises:
the IMS network stores the subscriber location information of the first terminal;
the IMS network sends a request message to a Home Location Register (HLR) located in the CS network, in order to inform HLR to update the subscriber location information of the first terminal;
HLR stores the subscriber location information of the first terminal acquired from the IMS network.

In reference to figure 2, the process for updating the subscriber location information in the CS network by the IMS network is specifically as following:
D0010, a subscriber initiates an initial registration in an IMS domain;
D0020, after the subscriber has succeeded in the registration in the Call Session Control Function (CSCF), CSCF triggers a third party registration to Service Centralization and Continuity Application Server (SCC_AS) according to an initial filter criteria (iFC) trigger rule;
N0030, when the third party registration succeeds, SCC_AS sends a MAP_Update_Location_Request request message to the HLR to inform the subscriber of current location information;
D0040, after the HLR receives the MAP_Update_Location_Request from the SCC_AS, the HLR sends a MAP_Insert Subscriber Date_Request request message to the SCC_AS for the current location information of the subscriber, and the SCC_AS returns a response message to the HLR with a MAP_Insert Subscriber_Date_Response message;
D0050, the HLR returns a MAP_Update_Location_Response message after it succeeds in storing the subscriber location information, and the subscriber registration succeeds.

A called subscriber roams to an IMS domain and succeeds in registration, when a calling party initiates a call in a CS domain, the specific process is as following:
A GMSC inquires the HLR and acquires that the current location information of the called subscriber is in the IMS domain, the call request is routed to a SCC AS;
the SCC AS adds an access code (AC) before the called number and returns it;
the GMSC analyses the AC routing request to a Media Gateway Control Function (MGCF), which removes the AC and then routes the call request to the IMS domain to handle corresponding services.

The above-mentioned system of supporting one number in SRVCC mainly includes the following devices in the IMS network: a Single Call Continuity Application Server (SCC AS) and a Call Session Control Function (CSCF). When a subscriber switches from an IMS domain to a CS domain, handover during a normal call, handover in ringing state (calling), handover in ringing state (called) in the case of the same number will be described respectively in detail.

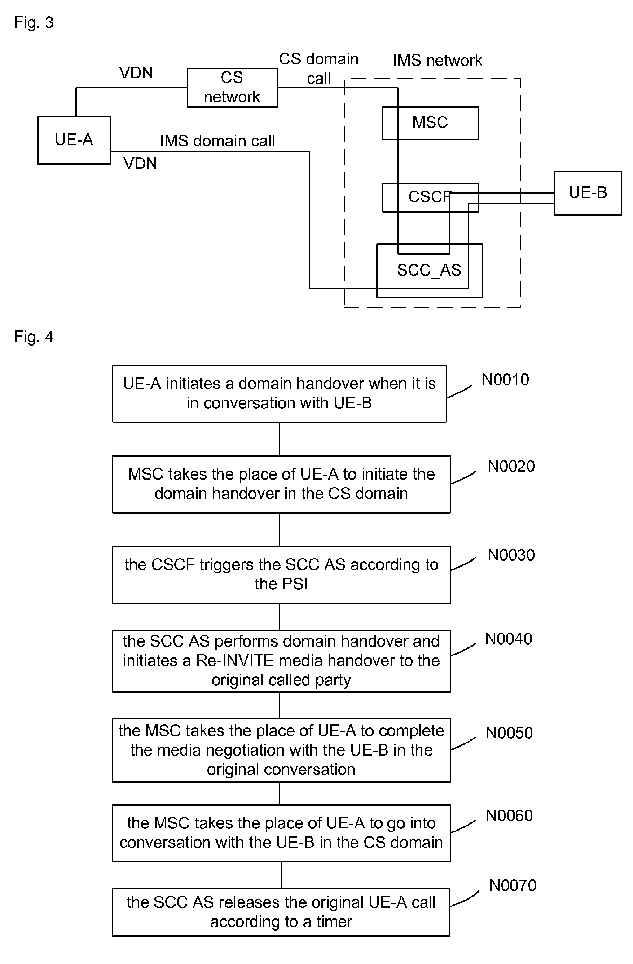

The IMS network implements setup of a conversation between the first terminal equipment and the second terminal equipment in the CS network by the SCC AS and the CSCF. The process in which the first terminal equipment in the embodiment serves as the calling party to initiate handover is as following: a subscriber UE-A of the SRVCC system uses the same subscriber number in the CS domain and the IMS domain, the UE-A succeeds in the registration in the IMS domain and sets up a call and then switches from the IMS domain to the CS domain, the SRVCC subscriber initiates the call after the registration in the CS domain, the called number being VDN; the CSCF in the CS domain routes the call to the SCC AS, the SCC AS inquires the original IMS domain call and makes the current call to succeed the original IMS domain call to set up the conversation to the original opposite subscriber, releasing the original IMS domain call of the CRVCC subscriber. During actual handover, an MSC is used instead of the UE-A to switch network, and the specific structure of the SRVCC is shown as figure 3.

In reference to figure 4, the specific process of handover during a normal call is actually as following:
N0010, a subscriber UE-A succeeds in the registration in the IMS domain and subscribes for the SRVCC service; the UE-A initiates the domain handover when it is in the conversation with a UE-B;
N0020, the MSC in the CS domain initiates the domain handover instead of the UE-A, the called number being VDN indicating handover from the IMS domain to the CS domain;
N0030, the CSCF triggers the SCC AS according to the PSI;
N0040, the SCC AS performs domain handover, finds out the original IMS domain call of UE-A and initiates a Re-INVITE media handover to the original called party;
N0050, the MSC instead of UE-A completes the media negotiation with the UE-B in the original conversation;
N0060, the MSC instead of UE-A goes into the conversation with the UE-B in the CS domain;
N0070, the SCC AS releases the original UE-A call according to a timer (i.e. not immediately).

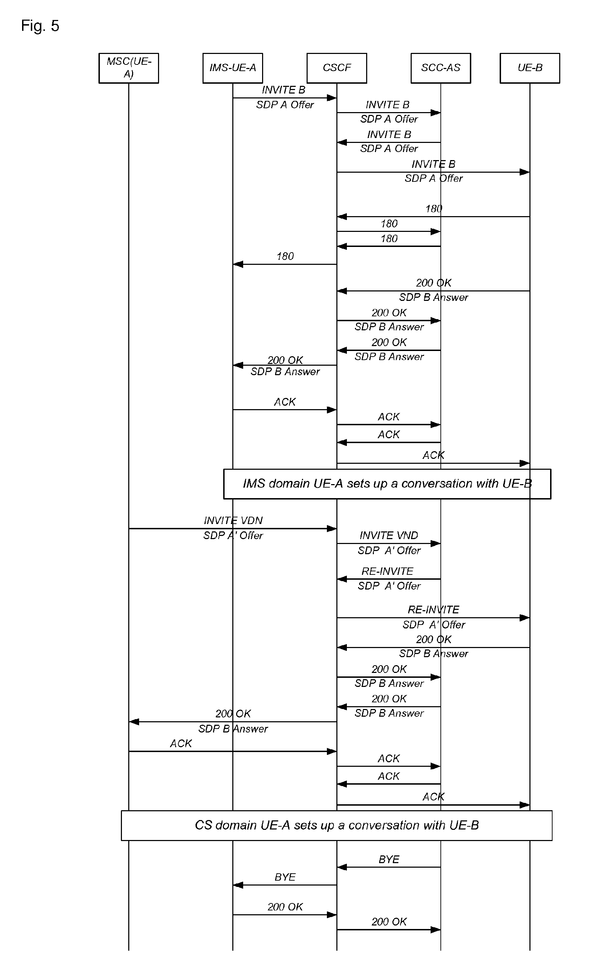

The detailed signalling procedure is described in reference to figure 5. In conjunction with figure 5, the handover procedure during the call process shown in figure 4 is described below.

The UE-A sends a request message "INVITE B (SDP A Offer)" calling the called UE-B to the CSCF through the IMS. The CSCF forwards the INVITE message to the SCC AS, which sends a acknowledgement message for acknowledging reception of the INVITE, and the acknowledgement message comprises the information relating to the UE-B. The CSCF initiates directly a call request to the UE-B through the INVITE message. The UE-B returns a 180 ringing message to the UE-A through the CSCF. The UE-B returns a 200 OK message to the UE-A through the CSCF and sets up an IMS domain call.

When the UE-A initiates a domain handover, the MSC in the CS domain instead of the UE-A sends an INVITE request message to the CSCF to initiates the domain handover, the called number being VDN. The SCC AS performs the domain handover, finding out the original IMS domain call of UE-A and initiating a Re-INVITE media handover to the original called party. The MSC instead of the UE-A completes the media negotiation with the UE-B in the original conversation. The MSC instead of the UE-A goes into the conversation with the UE-B in the CS domain. The SCC AS releases the original call of the UE-A according to a timer.

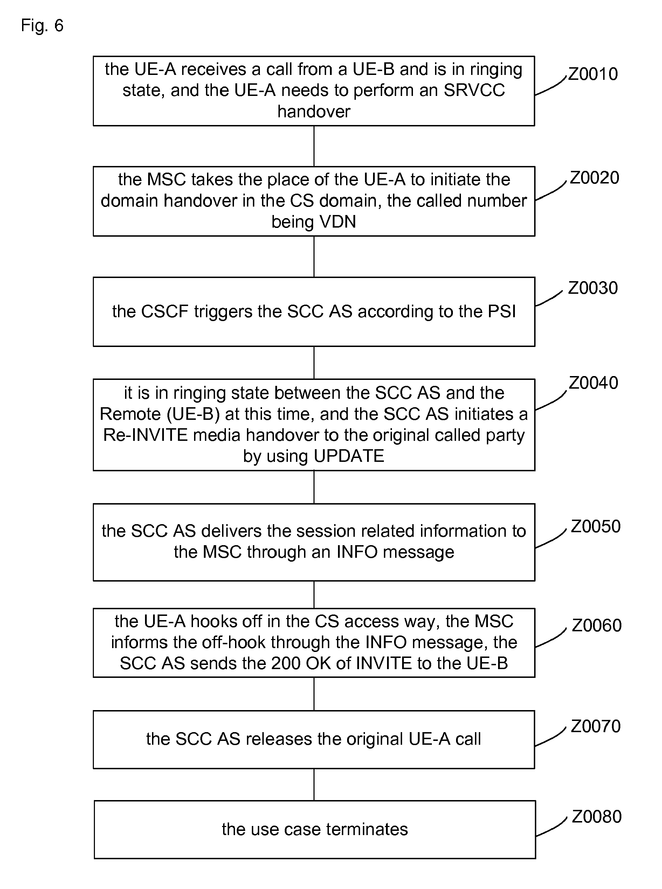

In the embodiment, when the UE-A is the called party, that is, in ringing state, due to a certain network condition, it is required to handover to another network for the conversation, the specific handover process in reference to figure 6 is as following:
Z0010, the UE-A receives a call from a UE-B and is in a ringing state, thus the UE-A needs to perform a SRVCC handover due to the access network;
Z0020, the MSC instead of the UE-A initiates the domain handover in the CS domain, the called number being VDN indicating handover from the IMS domain to the CS domain;
Z0030, the CSCF triggers the SCC AS according to the PSI;
Z0040, it is in the ringing state between the SCC AS and the Remote (UE-B) at this time, and the SCC AS initiates a Re-INVITE media handover to the original called party through UPDATE;
Z0050, the SCC AS delivers session related information to the MSC through an INFO message;
Z0060, the UE-A hooks off in the CS access way, and the MSC informs the off-hook through the INFO message. The SCC AS sends the 200 OK of INVITE to the UE-B, indicating the off-hook.
Z0070, the SCC AS releases the original UE-A's call;
Z0080, the use case terminates.

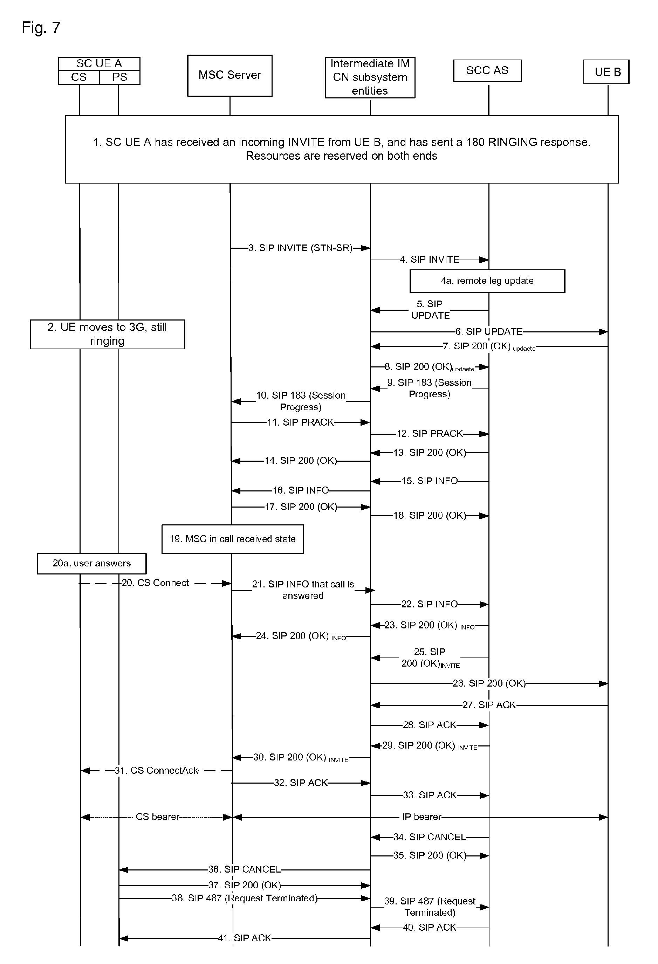

The specific process of signalling interaction is described in reference to figure 7. In conjunction with figure 7, the handover procedure in the ringing state is described below.
Step 1, a UE-A receives a call from a UE-B and is in the ringing state;
Step 2, the UE-B moves to 3G and is still ringing; it is required to perform the SRVCC handover due to the access network;
Step 3 and 4, the MSC instead of the UE-A initiates the domain handover in the CS domain, the called number being VDN indicating handover from the IMS domain to the CS domain;
Step 4a to 8, the CSCF triggers the SCC AS according to PSI; it is in the ringing state between the SCC AS and the Remote (UE-B) at this time, the SCC AS initiates a Re-INVITE media handover to the original called party through UPDATE;
Step 9 to 19, the SCC AS delivers the session related information to the MSC through an INFO message;
Step 20a to 35, the UE-A hooks off in the CS access way, the MSC informs the off-hook through the INFO message. The SCC AS sends the 200 OK of INVITE to the UE-B, indicating the off-hook.
Step 36 to 41, the SCC AS releases the original UE-A's call.

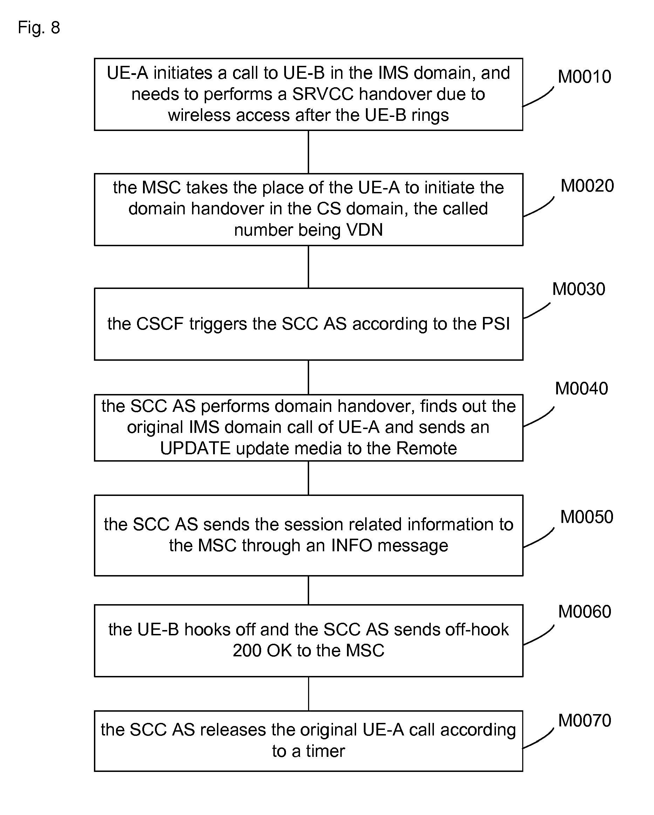

The subscriber has the same number in the IMS domain and the CS domain. For the call which is initiated by a handover subscriber (calling party), even if in the ringing state, it should be able to perform SRVCC handover, to have the called subscriber to hook off, such that the handover subscriber in the CS domain can set up a conversation with the called party. In reference to figure 8, the specific process is as following:
M0010, a UE-A initiates a call to a UE-B in the IMS domain, and needs to make a SRVCC handover for the sake of wireless access after the UE-B rings.
M0020, the MSC instead of the UE-A initiates the domain handover in the CS domain, the called number being a VDN indicating handover from the IMS domain to the CS domain;
M0030, the CSCF triggers the SCC AS according to the PSI;
M0040, the SCC AS makes domain handover, finds out the original IMS domain call of UE-A and sends an UPDATE update media to the Remote;
M0050, the SCC AS sends the information relating to the conversation to the MSC through an INFO message;
M0060, the UE-B hooks off and the SCC as sends off-hook 200 OK to the MSC;
M0070, the SCC AS releases the original UE-A call according to a timer.

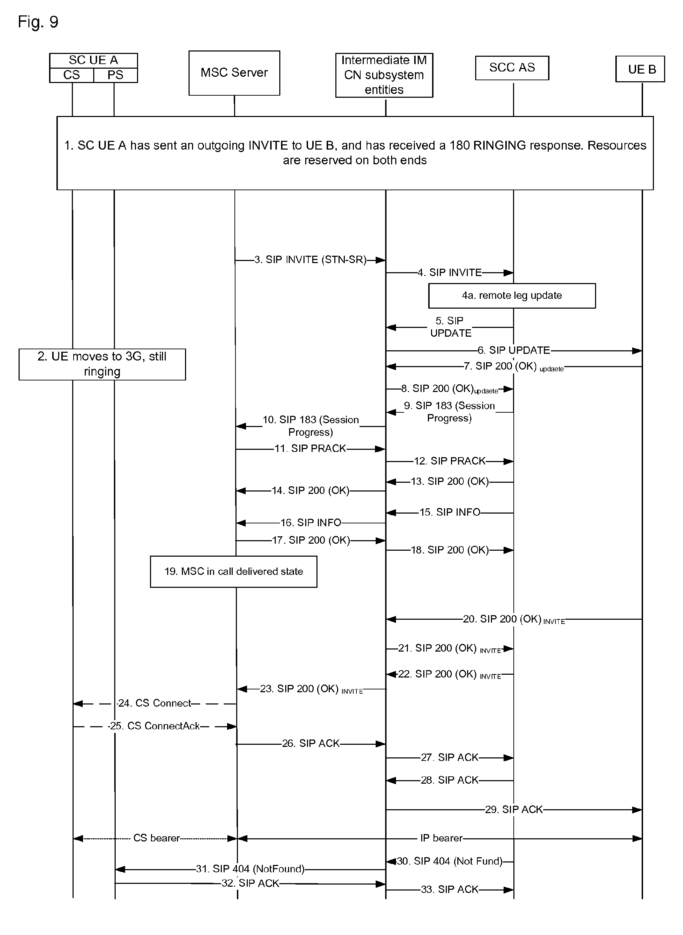

The specific process of signalling interaction is described in reference to figure 9.
Step 1 to 2, a UE-A initiates a call to a UE-B in the IMS domain, and needs to make a SRVCC handover for the sake of wireless access after the UE-B rings.
Step 3 to 4, the MSC instead of the UE-A initiates the domain handover in the CS domain, the called number being a VDN indicating handover from the IMS domain to the CS domain;
Step 4a to 8, the CSCF triggers the SCC AS according to PSI; the SCC AS performs the domain handover, finds out the original IMS domain call of UE-A and sends an UPDATE update media to the Remote;
Step 9 to 19, the SCC AS sends the session related information to the MSC through an INFO message;
Step 20 to 23, the UE-B hooks off and the SCC AS sends off-hook 200 OK to the MSC;
Step 24 to 33, the SCC AS releases the original UE-A call according to a timer.

The above content aims to further describe the disclosure in detail in conjunction with specific implementations, but not to be considered to have the specific embodiments of the disclosure to be limited within the descriptions. For those skilled in the art of the disclosure, possible simple deductions or replacements should be regarded as belonging to the scope of the disclosure, without being beyond the conception of the disclosure.

### INDUSTRIAL APPLICATION

The scheme of the disclosure brings convenience to the subscriber, since the same subscriber number can be used during network handover of the terminal. When the first terminal equipment in the system serves as the calling party to switch network, the same subscriber number is used to set up a call to a second terminal equipment in a different network, which improves the efficiency of the SRVCC system. Meanwhile, when the first terminal equipment serves as the called party, the IMS network stores the subscriber location information and updates the subscriber location information in the HLR of the CS network. When the second terminal equipment calls the first terminal equipment, this enables the second terminal equipment to set up a call to the first terminal through the initial network in which the first terminal equipment is, thus solving the problem of impossible network recognition brought by the same subscriber number used by the first terminal.

## Claims

1. A method of supporting one number in Single Radio Voice Call Continuity (SRVCC), comprising:
setting up in an Internet Protocol Multimedia Subsystem (IMS) network, by a first terminal equipment using a subscriber number, a conversation with a second terminal equipment; and
setting up in a Circuit Switched (CS) network, by the first terminal equipment using the subscriber number, a conversation with the second terminal equipment, when the first terminal equipment serves as a calling party and performs a handover from the IMS network to the CS network.

2. The method of supporting one number in SRVCC according to claim 1, further comprising:
updating, by the IMS network, subscriber location information in the CS network, when the first terminal equipment initially registers with the IMS network.

3. The method of supporting one number in SRVCC according to claim 2, further comprising:
when the second terminal equipment serves as the calling party to call the first terminal equipment in the IMS network or the CS network, performing the following by the IMS network or the CS network:
inquiring the subscriber location information,
determining a network in which the first terminal equipment is, and
setting up the conversation with the first terminal equipment in the network.

4. The method of supporting one number in SRVCC according to claim 1 or 2, wherein setting up in the CS network, by the first terminal equipment using the subscriber number, a conversation with the second terminal equipment, when the first terminal equipment performs a handover from the IMS network to the CS network, comprises:
setting up in the CS network, by the first terminal equipment using the subscriber number, a call to a Single Call Continuity Application Server (SCC AS);
triggering, by a Call Session Control Function (CSCF), the SCC AS;
by the SCC AS, inquiring an original IMS network call, making the current call to succeed the original IMS network call, setting up the conversation with the second terminal equipment, and releasing the original IMS domain call.

5. The method of supporting one number in SRVCC according to claim 2 or 3, wherein updating, by the IMS network, subscriber location information in the CS network, comprises:
storing, by the IMS network, the subscriber location information of the first terminal;
sending, by the IMS network, a request message to a Home Location Register (HLR) located in the CS network, in order to inform the HLR to update the subscriber location information of the first terminal; and
storing, by the HLR, the subscriber location information of the first terminal from the IMS network.

6. A system of supporting one number in Single Radio Voice Call Continuity (SRVCC), comprising an Internet Protocol Multimedia Subsystem (IMS) network, a Circuit Switched (CS) network, a first terminal equipment and a second terminal equipment;
wherein the first terminal equipment is configured to set up in the IMS network, using a subscriber number, a conversation with the second terminal equipment, and
set up in the CS network, using the subscriber number, a conversation with the second terminal equipment, when the first terminal equipment serves as a calling party and performs a handover from the IMS network to the CS network.

7. The system of supporting one number in SRVCC according to claim 6, wherein the IMS network is configured to update the subscriber location information in the CS network, when the first terminal equipment initially registers with the IMS network.

8. The system of supporting one number in SRVCC according to claim 7, wherein the second terminal equipment is configured to call the first terminal equipment in the IMS network or the CS network; and
wherein the IMS network or the CS network is configured to, when the second terminal equipment serves as the calling party to call the first terminal equipment in the IMS network or CS network, inquire the subscriber location information, determine a network in which the first terminal equipment is, and set up the conversation with the first terminal equipment in the network.

9. The system of supporting one number in SRVCC according to claim 6 or 7, wherein the IMS network comprises a Single Call Continuity Application Server (SCC AS) and a Call Session Control Function (CSCF);
wherein the first terminal equipment is configured to set up in the CS network, using the subscriber number, a call to the SCC AS,
wherein the CSCF is configured to trigger the SCC AS, and
wherein the SCC AS is configured to inquire the original IMS network call, make the current call to succeed the original IMS network call, set up the conversation with the second terminal equipment, and release the original IMS domain call.

10. The system of supporting one number in SRVCC according to claim 7 or 8, wherein the CS network comprises a Home Location Register (HLR);
wherein the IMS network is configured to store the subscriber location information of the first terminal, send a request message to the HLR located in the CS network to inform the HLR to update the subscriber location information of the first terminal; and
wherein the HLR is configured to acquire the subscriber location information of the first terminal from the IMS network and store the subscriber location information of the first terminal.
